Europäisches Patentamt

European Patent Office

Office européen des brevets

(11) Numéro de publication: **0 344 078**
**A1**

## (12) DEMANDE DE BREVET EUROPEEN

(21) Numéro de dépôt: **89420183.9**

(22) Date de dépôt: **29.05.89**

(51) Int. Cl.⁴: **A 01 G 31/00**

(30) Priorité: **27.05.88 FR 8807129**

(43) Date de publication de la demande:
**29.11.89 Bulletin 89/48**

(84) Etats contractants désignés: **BE DE LU**

(71) Demandeur: **Boissel, Jean-François**
**9, rue Champollion**
**F-75005 Paris (FR)**

**Lemaire, François**
**Ferme de Nuisement**
**Thieblemont F-51300 Vitry le François (FR)**

(72) Inventeur: **Boissel, Jean-François**
**9, rue Champollion**
**F-75005 Paris (FR)**

**Lemaire, François**
**Ferme de Nuisement**
**Thieblemont F-51300 Vitry le François (FR)**

(74) Mandataire: **Ropital-Bonvarlet, Claude**
**Cabinet BEAU DE LOMENIE 99, Grande rue de la**
**Guillotière**
**F-69007 Lyon (FR)**

(54) **Conditionnement modulaire permettant, à la fois, la culture in vitro de plantes et une distribution et une utilisation auprès du grand public.**

(57) - Le conditionnement est réalisé en une matière plastique incassable, transparente et résistante à des températures d'étuvage.

Une partie inférieure (1) retient emprisonné un volume de gelée nutritive (6).

L'extrémité supérieure est fermée par un bouchon inviolable (7) avec une ouverture centrale (10) obturée par une membrane microporeuse (9) et qui permet les échanges de gaz entre l'intérieur du tube (4) et l'environnement externe.

- Ce conditionnement convient à permettre le développement in vitro de plantes destinées au grand public.

EP 0 344 078 A1

**Description**

# CONDITIONNEMENT MODULAIRE PERMETTANT, A LA FOIS, LA CULTURE IN VITRO DE PLANTES ET UNE DISTRIBUTION ET UNE UTILISATION AUPRES DU GRAND PUBLIC

La présente invention a pour objet un conditionnement modulaire permettant, à la fois, la culture in vitro de plantes et une distribution et une utilisation auprès du grand public de telles plantes à des fins ornementales.

La culture in vitro, bien connue depuis longtemps en biotechnologie et telle qu'appliquée aux domaines d'activités des pépiniéristes et des forestiers, consiste à développer des plantes en les confinant dans une atmosphère aseptique, en leur fournissant l'énergie nécessaire à la photosynthèse par une lumière, solaire ou artificielle, et en alimentant ces plantes à partir d'une gelée nutritive contenant d'avance, pour une longue période de développement, les qualités et quantités nécessaires de sels, sucres, eau, etc...

Cette culture s'effectue, généralement, dans les récipients bien connus que constituent les tubes à essai des laboratoires.

Cette technologie permet d'améliorer les espèces ainsi cultivées et de les protéger aussi longtemps que possible, avant leur sevrage, des attaques en provenance d'un environnement polluant (champignons, virus, poussières ...).

L'idée de transférer cette technique bien connue à des plantes destinées à la grande consommation apparaît assez évidente et c'est ainsi que, au cours des dernières années, on a pu assister à plusieurs tentatives de tels transferts de technologie qui, toutefois, ont toujours fait long feu.

Les raisons, qui sont diverses, de ces échecs semblent bien provenir de ce que, pour chacune de ces tentatives, on s'est limité à développer in vitro des plantes en conditions de laboratoire aseptique dans des récipients banalisés en verre de diverses formes, disponibles dans le commerce (verres à boire, canettes de bière, carafes et carafons ...), puis que l'on s'est contenté de fermer ces récipients pour isoler leur milieu intérieur encore aseptique d'un futur environnement polluant et les mettre ainsi directement en circulation.

Tous ces produits présentent une série d'inconvénients qui les rendent finalement inaptes à leur destination grand public.

Tout d'abord, il sont fragiles et cassables, ce qui présente un danger d'autant plus grand que ces plantes excitent la curiosité des jeunes enfants.

Ensuite, lorsqu'ils sont fermés de manière hermétique, il s'y produit des phénomènes de condensation d'eau, variables d'ailleurs en fonction du cycle diurne et intéressants scientifiquement de ce point de vue, mais jouant totalement au détriment de la visibilité des plantes in vitro, ce qui est pourtant l'objectif majeur à atteindre.

Par ailleurs, lorsque la fermeture du récipient n'est pas inviolable, il existe toujours le risque d'ouverture inopinée du récipient entraînant automatiquement la mort de la plante attaquée aussitôt par l'environnement polluant.

Enfin, ces produits restent difficilement transportables par suite de décollement de la gelée nutritive par rapport aux fonds de récipients lorsque ceux-ci quittent accidentellement la position verticale.

La présente invention a pour but de proposer un conditionnement modulaire supprimant tous les inconvénients précités.

A cet effet, l'invention a pour objet un conditionnement modulaire, permettant, à la fois, la culture in vitro de plantes et une distribution et une utilisation auprès du grand public, caractérisé en ce que :
- il est réalisé en une matière plastique qui est, à la fois, incassable, tranparente et stable, à des températures inférieures à celles permettant un étuvage d'aseptisation, telle que du polycarbonate,
- et il est conformé de manière à définir, d'une part, un volume inférieur destiné à recevoir la gelée nutritive, des moyens étant prévus pour maintenir en place dans ce volume la gelée quelle que soit l'orientation dans l'espace du conditionnement modulaire, et, d'autre part, un volume intérieur de croissance et développement de la plante, ce volume étant fermé par un bouchon inviolable présentant au moins un orifice obturé par une très fine membrane microporeuse dont les micropores sont de dimensions telles qu'ils permettent le passage de molécules de gaz à travers la membrane, mais interdisent le passage de particules de dimensions plus importantes.

On comprend aisément qu'un tel conditionnement, présentant de manière nécessaire et suffisante les caractéristiques énoncées ci-dessus, permette, à la fois, la culture in vitro en milieu aspetique de laboratoire de plantes, puis leur distribution vers le grand public et leur utilisation par lui à des fins de plaisir, curiosité, ornementation.

En effet, le matériau, dont est constitué le conditionnement, est choisi parmi les matières plastiques pour être incassabe, transparent et étuvable.

La dernière qualité permet, après étuvage et aseptisation du conditionnement, d'introduire la gelée nutritive et la graine ou la bouture de la plante à cultiver en milieu aseptique de laboratoire.

L'incassabilité permet, en toute sécurité, toutes les opérations de manipulation en laboratoire, de transport, y compris sans précaution spéciale, et d'utilisation domestique.

Les moyens de retenue de la gelée nutritive dans son volume réservé concourent, également, à rendre le produit insensible aux orientations accidentelles diverses qu'il peut prendre au cours de ses transports et/ou manutentions.

Enfin, la transparence des parois du conditionnement est sauvegardée en permanence, en raison de la prévision indispensable de la membrane microporeuse qui permet à la vapeur d'eau, qui risquerait de se saturer à l'intérieur du conditionnement, de s'en échapper vers l'extérieur.

Outre ces caractéristiques fonctionnelles nécessaires, un conditionnement selon l'invention peut, en outre, présenter d'autres caractéristiques formelles, par exemple lui permettant d'être posé sur une surface horizontale, ou de venir se placer dans une embase spéciale, ou de pouvoir s'appliquer le long d'une surface verticale, ou encore de pouvoir se solidariser de diverses manières avec d'autres modules.

Quant à la forme proprement dite que revêt le conditionnement, elle peut être d'une très grande diversité en fonction de choix esthétiques variés. La protection juridique de ces formes ne relève d'ailleurs pas de la présente demande de brevet.

L'invention sera encore mieux comprise à l'aide de la description d'un mode très simple de sa mise en oeuvre.

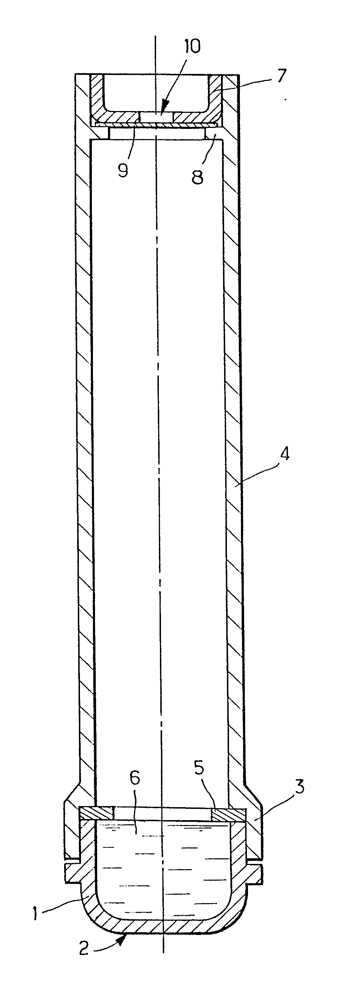

On se référera à la figure unique qui représente, en coupe longitudinale, un conditionnement selon l'invention.

Le conditionnement représenté évoque, généralement, la forme d'un tube à essai de laboratoire. Il est à section circulaire. On peut choisir d'autres formes de section triangulaire, carrée, pentagonale, hexagonale ...

De même, alors que la forme représentée est cylindrique, allongée verticalement, elle peut aussi être moins haute par rapport au diamètre ou, encore, revêtir la forme d'une galette.

La matière utilisée pour la fabrication du conditionnement est du polycarbonate et les différentes pièces composantes sont fabriquées par injection.

On peut aussi utiliser d'autres matières et d'autres procédés de fabrication, notamment le thermosoufflage, à condition que ces matières et procédés sauvegardent les qualités de solidité, transparence et d'aptitude à l'étuvage.

La partie inférieure est constituée d'un culot **1** à fond plat **2**. Il vient s'emmancher à force dans la partie cylindrique élargie inférieure **3** du tube **4** avec interposition d'une couronne **5** à large ouverture centrale.

La gelée nutritive **6** est introduite à l'état liquide pour remplir le volume intérieur du culot **1** avec sa surface supérieure au niveau de la couronne **5**. Après gélification, cette couronne emprisonne donc la gelée en place et lui évite tout décrochement.

La plante, non représentée, est mise en place en laboratoire aseptique au sein de la gelée nutritive, sous forme de graine ou de bouture.

Ensuite, toujours en atmosphère aseptique de laboratoire, le tube renfermant la plante est obturé par un bouchon inviolable **7** enfoncé à force contre un épaulement annulaire **8** de la partie supérieure du tube **4**. Entre la base du bouchon **7** et l'épaulement **8** est interposée une rondelle **9** d'une très mince membrane microporeuse et le bouchon **7** présente un orifice circulaire central **10**.

L'échange de molécules de gaz entre l'intérieur du tube et l'extérieur et, réciproquement, peut donc s'effectuer librement par ce petit orifice obturé par la membrane, en raison de la dimension des micropores de cette membrane, ce qui évite une saturation de vapeur d'eau à l'intérieur.

Par contre, une fois placé dans une atmosphère polluante, les champignons, germes, poussières, virus et autres agents agressifs, contenus dans cette atmosphère, ne peuvent pénétrer dans l'intérieur du tube **4**.

Bien entendu, l'exemple décrit ci-dessus n'est qu'illustratif. En particulier, on imagine assez aisément le grand nombre de variantes qu'il est possible d'imaginer, tant pour retenir en place la gelée nutritive que pour interposer une membrane microporeuse entre le volume intérieur du conditionnement et son environnement extérieur.

**Revendications**

1- Conditionnement modulaire, permettant, à la fois, la culture in vitro de plantes et une distribution et une utilisation auprès du grand public,
caractérisé en ce qu'il est conformé de manière à définir:
- d'une part, un volume inférieur (**1**) destiné à recevoir une gelée nutritive (**6**) et équipé de moyens (**5**) pour maintenir en place dans ce volume la gelée, quelle que soit .l'orientation dans l'espace du conditionnement modulaire,
- et, d'autre part, un volume intérieur de croissance et développement de la plante, ce volume étant fermé par un bouchon inviolable (**7**) présentant au moins un orifice (**10**) obturé par une très fine membrane microporeuse (**9**) dont les micropores sont de dimensions telles qu'ils permettent le passage de molécules de gaz à travers la membrane mais interdisent le passage de particules de dimensions plus importantes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 016 444 (BREVETEAM S.A.)<br>* document complet *<br>----- | 1 | A 01 G 31/00 |

**DOMAINES TECHNIQUES RECHERCHES (Int. Cl.4)**

A 01 G 31/00

Le présent rapport a été établi pour toutes les revendications

| Lieu de la recherche | Date d'achèvement de la recherche | Examinateur |
|---|---|---|
| BERLIN | 04-08-1989 | WUNDERLICH J E |

FPO FORM 1503 03.82 (P0402)